# FASCICULE DE BREVET EUROPEEN

(11) **EP 1 612 076 B1**
(45) Date de publication et mention de la délivrance du brevet: **25.04.2007**
(21) Numéro de dépôt: 05291402.5
(22) Date de dépôt: 29.06.2005
(51) Int. Cl.: B60J 7/14

(54) **Dispositif de commande pour le basculement d'un toit mobile et véhicule correspondant**
Steuervorrichtung zum Kippen eines bewegbaren Dach und entsprechendes Fahrzeug
Tilting device for movable roof and corresponding vehicle

(30) Priorité: 02.07.2004 FR 0407418
(43) Date de publication de la demande: 04.01.2006
(73) Titulaire: Heuliez, 79142 Cerizay (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Pichat, Thierry

(56) Documents cités:
- DE-A1- 4 010 276
- US-A- 3 059 962
- US-A1- 2002 125 733

## Description

L'invention concerne la commande en basculement d'au moins un panneau de toit mobile pour un véhicule découvrable.

On connaît différents exemples de véhicules découvrables, c'est-à-dire de véhicules pourvus d'un toit comprenant au moins un panneau mobile permettant de découvrir au moins en partie ce toit.

Parmi ces véhicules, on peut en particulier citer les cabriolets et les coupés découvrables, ou encore des véhicules (par exemple berlines) découvrables avec au moins deux rangées de sièges.

Un exemple de tels véhicules existe dans W0-A-01/62533 et US 2002/125 733.

On peut ainsi considéré comme connu un véhicule découvrable comprenant un bâti structurel, un habitacle, au moins deux sièges côte à côte disposés dans cet habitacle, de part et d'autre d'un plan longitudinal vertical du véhicule, et un toit mobile entre une position fermée au-dessus de l'habitacle et une position ouverte atteinte par dégagement du toit vers l'arrière de cet habitacle, le toit comprenant au moins un panneau de toit qui s'étend transversalement audit plan longitudinal vertical et est monté basculant vis-à-vis du bâti structurel du véhicule, ce véhicule étant pourvu en outre d'un dispositif de commande pour le basculement dudit panneau de toit, le dispositif de commande comprenant un actionneur disposé et agissant sensiblement dans ledit plan longitudinal vertical, cet actionneur, qui est donc lié audit panneau de toit pour le faire basculer, comprenant une partie fixe et une partie mobile, la partie fixe étant lié au bâti structurel du véhicule, la partie mobile étant liée de façon articulée à un organe intermédiaire d'entraînement qui est lié audit panneau de toit pour l'entraîner en rotation et est animé d'un mouvement de rotation autour d'un axe transversal audit plan longitudinal vertical du véhicule.

Sur la base des solutions existantes, un but de l'invention est de proposer une solution au problème de l'encombrement des systèmes d'entraînement ou de commande de ce(s) panneau(x) de toit, en proposant une solution fiable, performante, réalisable en série, économique et qui assure avec un encombrement réduit une articulation de l'ampleur souhaitée, sans interférer exagérément avec l'espace à réserver pour d'autres applications (habitacle pour les passagers, zone de rangement pour les bagages...).

Dans ce contexte, il est tout d'abord proposé dans l'invention que l'organe intermédiaire précité d'entraînement commandé en rotation par l'actionneur soit fixé, derrière les sièges, à une poutre structurelle appartenant au bâti structurel du véhicule et s'étendant suivant un axe transversal audit plan longitudinal vertical du véhicule.

Avantageusement l'actionneur sera unique et le plan longitudinal vertical sera le plan médian du véhicule, d'où une compacité et un gain de place accrus.

Pour des avantages comparables, on conseille aussi que l'actionneur soit disposé entre les deux sièges, sensiblement au niveau de leur dossier.

Les revendications jointes apportent des solutions favorisant une articulation solide, avec une rotation qui peut amener à faire tourner court le panneau de toit concerné.

Pour associer encore compacité, guidage précis et solidité, on prévoit que l'organe intermédiaire d'entraînement en rotation dudit panneau de toit comprendra avantageusement un tube s'étendant globalement transversalement au plan longitudinal vertical du véhicule.

Toujours par souci de compacité et pour un guidage fiable, précis et sûr, on conseille en outre que la partie fixe de l'actionneur soit fixée à une pièce de guidage vis-à-vis de laquelle elle sera monté pivotante, cette pièce de guidage comprenant une ou plusieurs glissières guidant des tourillons prévus sur au moins une biellette participant à la liaison articulée entre la partie mobile de l'actionneur et ledit organe intermédiaire d'entraînement.

Sur un véhicule entièrement découvrable, tel qu'un cabriolet, le toit comprendra avantageusement au moins deux panneaux de toit. Avantageusement, les caractéristiques de la revendication 2 annexée seront alors appliquées.

On conseille également, toujours par souci de compacité et d'efficacité dans le mouvement imprimé par l'actionneur central, et en particulier si le premier panneau de toit est un panneau transversal arrière de custode pourvu donc d'une lunette arrière, que le tube entraîné en rotation par l'actionneur soit monté vers l'arrière de ce premier panneau de toit.

En liaison avec la fixation à la poutre structurelle, on associera ainsi fiabilité et efficacité dans la commande des mouvements du toit et rigidité/résistance mécanique.

Dans ce contexte, on conseille de mettre en oeuvre les caractéristiques de la revendication 3.

Pour la sécurité des passagers, compte-tenu du système de commande de toit présenté ci-avant, on conseille aussi que les caractéristiques de la revendication 4 soient appliquées.

D'autres caractéristiques et avantages de l'invention apparaîtront de la description encore plus détaillée qui suit, en référence aux dessins donnés uniquement à titre d'exemple non limitatif et dans lesquels :
- la figure 1 montre schématiquement de côté un véhicule auquel le dispositif de commande de l'invention est applicable.
- la figure 2 montre en perspective locale intérieure, schématique, une partie du véhicule, à proximité d'une portion essentielle du dispositif de commande de l'invention, ici vers l'arrière du siège droit du véhicule,
- la figure 3 est une vue locale de côté agrandie dans le sens de la flèche III de la figure 2,
- la figure 4 est une vue de dessus (flèche IV de la figure 2) complétée à droite du plan médian du véhicule (petite échelle),
- et la figure 5 montre plus particulièrement la poutre transversale à laquelle est liée le panneau pivotant directement commandé en rotation par l'actionneur, suivant une perspective à échelle réduite.

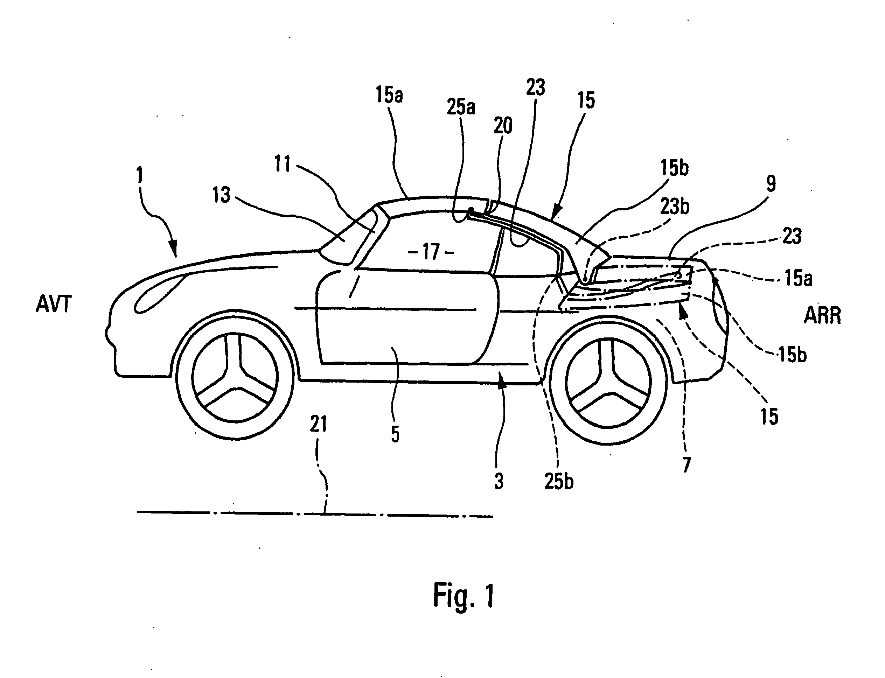

Figure 1, le véhicule 1 comprend un bâti structurel 3, également appelé caisse ou structure du véhicule, qui intègre ici les portières telles que 5, un coffre arrière 9 et un cadre frontal 11 délimitant un pare-brise 13, notamment.

Le véhicule 1 est un coupé découvrable à toit 15 entièrement escamotable dans le coffre 7, à l'arrière de l'habitacle 17.

Ainsi, sur le bâti structurel 3 s'articule le toit escamotable 15, de manière que le véhicule puisse être transformé en convertible.

Le toit 15 est mobile entre une position fermée représenté en trait plein sur la figure 1 et une position ouverte, repliée, représenté en traits mixtes sur cette même figure.

Dans la position fermée, le toit s'étend au-dessus de l'habitacle 17 du véhicule qu'il ferme au moins essentiellement à sa partie supérieure, tandis qu'en position ouverte, le toit est ici disposé derrière l'habitacle.

Le toit 15 comprend plusieurs panneaux de toit rigides, mobiles, adaptés pour recouvrir l'habitacle 17 dans leur première position relative déployée (toit fermé, trait plein sur la figure 1), tout en pouvant être repliés les uns vers les autres dans la deuxième position ouverte, rangée du toit.

Dans la réalisation illustrée, le toit 15 comprend deux panneaux rigides de toit 15a, 15b définissant respectivement un panneau de toit avant et, derrière suivant l'axe 21, un panneau de toit arrière, cette position relative entre les panneaux étant respectée dans la position fermée du toit, tandis que dans la position ouverte, les deux panneaux de toit sont ici disposés l'un au-dessus de l'autre, sensiblement horizontalement, repliés qu'ils sont derrière l'habitacle.

Le toit 15 pourrait comprendre un nombre de panneaux rigides autre que deux.

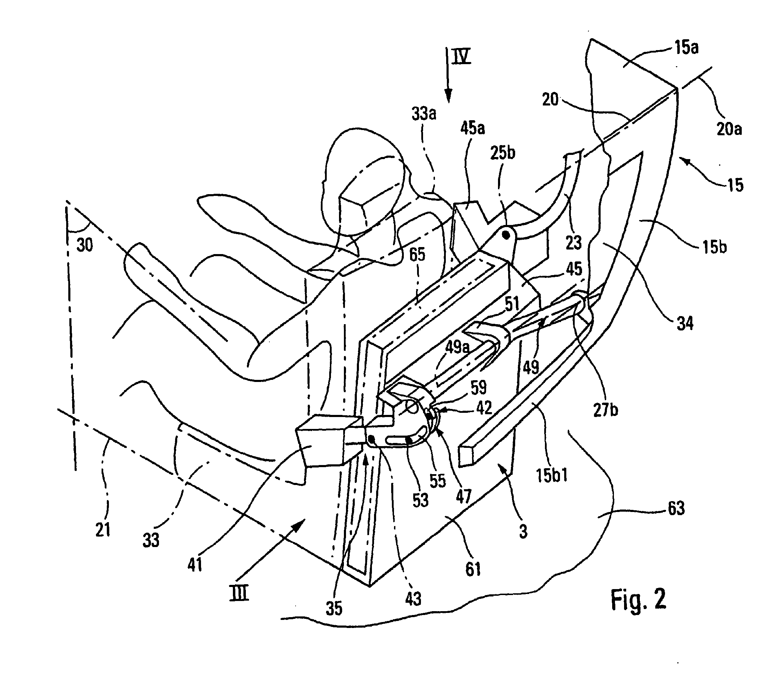

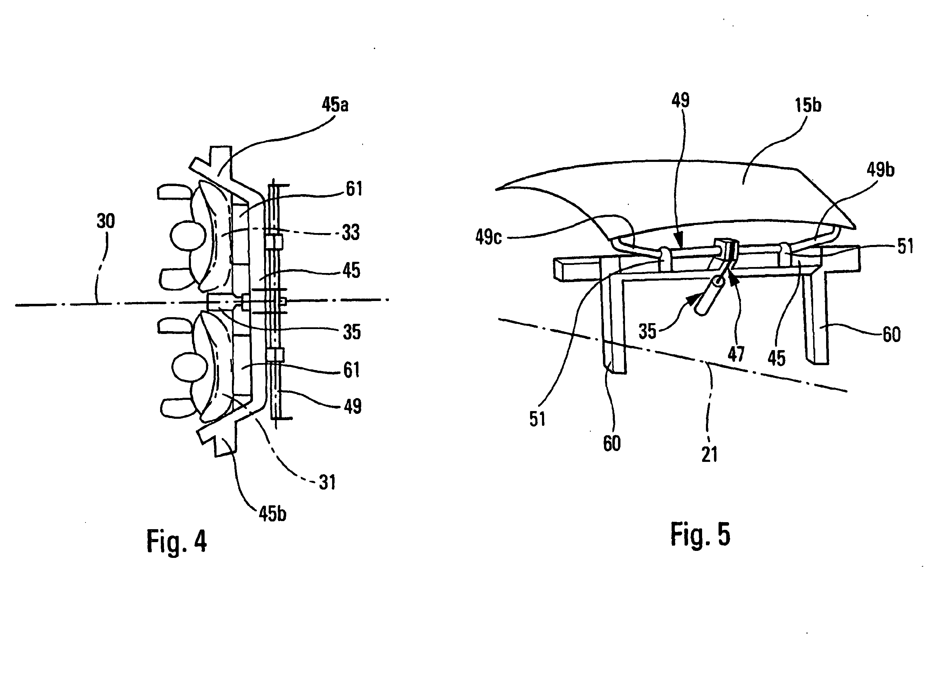

Ceci étant, dans l'exemple illustré, les éléments de toit avant 15a et arrière 15b sont reliés entre eux, respectivement vers leur bord arrière et leur bord avant, par une articulation 20. Figure 2 on a repéré 20a l'axe d'articulation entre ces panneaux. Cet axe est transversal (ici perpendiculaire) à l'axe longitudinal 21 du véhicule, ainsi qu'au plan vertical médian 30 parallèle à cet axe 21. Le plan 30 constitue donc globalement le plan de symétrie de part et d'autre duquel se trouvent, sur la figure 4, notamment les sièges gauche 31 et droit 33 (conducteur et passager), situés côte à côte. A toutes fins utiles, il est précisé que l'axe 21 est perpendiculaire à l'essieu des roues non directrices du véhicule.

Figure 1, AVT et ARR repèrent respectivement l'avant et l'arrière du véhicule, suivant l'axe longitudinal 21.

Pour sa manoeuvre en basculement, le panneau de toit avant 15a est entraîné entre ses positions ouverte et fermée par au moins un bras 23 articulé sur l'arrière du panneau, autour d'un axe transversal 25a. On dénommera « transversal », tout axe transversal, et en particulier perpendiculaire, à l'axe longitudinal 21 et/ou au plan longitudinal vertical médian 30.

A son autre extrémité, le bras 23 que l'on voit également sur la figure 2 est articulé vis-à-vis du bâti 3, autour d'un axe transversal 25b.

De préférence, deux bras 23 seront prévus, situés latéralement, chacun de part et d'autre du toit.

En 27b, on a par ailleurs repéré sur les figures 1 et 2 l'un des points latéraux de la liaison, ici rigide, entre le panneau de toit 15b et son mécanisme d'entraînement en basculement.

Bien qu'il puisse en être autrement, le panneau 15b à partir duquel s'effectue la commande en basculement de l'ensemble du toit 15, est ici un panneau arrière de custode s'étendant suivant une surface transversale, en particulier perpendiculaire, au plan longitudinal médian 30. Figure 2, on a d'ailleurs schématisé en 34 une partie de la lunette arrière du véhicule.

Pour la commande du panneau de toit 15b, on utilise, conformément à une caractéristique importante de l'invention, un actionneur 35 qui est disposé et agit sensiblement dans le plan longitudinal vertical médian 30, via les mouvements de sa partie mobile 37.

Eventuellement, si la rangée de sièges concernée comprenait par exemple trois sièges côte à côte, l'actionneur 35 s'étendrait et agirait alors suivant un plan longitudinal vertical parallèle audit plan médian 30. Cet actionneur 35 (de préférence unique) comprend ici un fût 39 et une tige (pièce mobile 37) montée donc coulissante par rapport à ce fût, sensiblement dans le plan 30. Il est avantageusement situé entre les deux sièges, sensiblement au niveau de leur dossier (figures 2 à 4). Typiquement, il sera légèrement inclinée par rapport à l'horizontale,

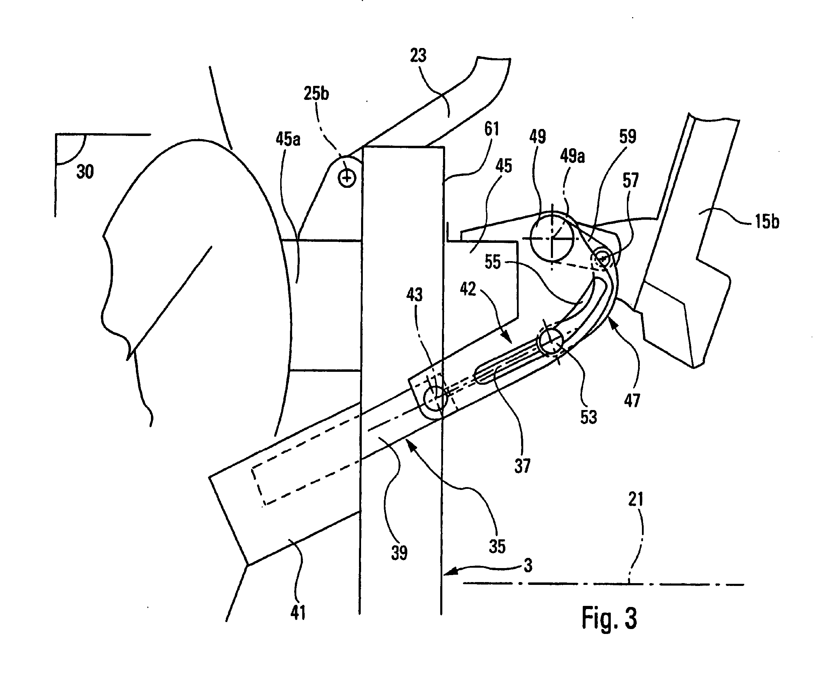

L'actionneur 35, et en particulier son fût 39, étant donc avantageusement situé entre les parties arrière des sièges, on peut protéger la partie avant la plus proéminente de son fût dans un boîtier 41 (figures 2 et 3).

La partie fixe, ou fût, 39 de l'actionneur 35 est liée au bâti structurel 3 du véhicule en étant portée par une pièce de guidage 42 liée à ce bâti.

Ici, le basculement du panneau 15b devant typiquement être court, la partie fixe 39 de l'actionneur est avantageusement montée articulée en rotation par rapport au bâti 3, autour d'un axe transversal 43 porté par la pièce de guidage 42 qui constitue une pièce du bâti structurel 3 en ce qu'elle est fixe par rapport à ce bâti et de surcroît avantageusement étroitement fixée à une poutre structurelle 45 s'étendant transversalement (ici essentiellement perpendiculairement) à l'axe longitudinal 21 entre les deux bords latéraux gauche et droit du véhicule, comme on le comprend au vu de la figure 4.

La partie mobile (tige coulissante 37) de l'actionneur 35 est liée de façon articulée, par un système de biellettes 47, à un organe intermédiaire d'entraînement 49 lié, ici directement par une fixation rigide, au panneau de toit 15b pour son basculement.

L'organe intermédiaire 49 est ici animé exclusivement d'un mouvement de rotation autour d'un axe transversal 49a.

Avantageusement, l'organe intermédiaire d'entraînement 49 comprend un tube cintré vers ses extrémités latérales, 49b 49c sur la figure 5, et s'étendant globalement transversalement au plan longitudinal médian 30, la fixation au panneau 15b s'opérant donc à ses extrémités latérales, en 27b comme déjà indiqué. Par souci d'efficacité et de limitation de l'encombrement, les liaisons en 27b entre le tube intermédiaire d'entraînement 49 et le panneau 15b s'opèreront avantageusement à proximité immédiate du bord transversal arrière 15b1 de ce panneau qui apparaît figure 2 comme le bord transversal le plus bas de ce panneau, puisque ce dernier est ici représenté dans une position intermédiaire où il s'étend sensiblement verticalement.

Bien que monté tournant autour de l'axe transversal 49a, le tube 49 est fixé au bâti structurel 3 du véhicule, et en l'espèce plus précisément à la poutre transversal 45, par des étriers 51 définissant des paliers.

En outre, le tube 49 traverse la pièce de guidage 42 pour pouvoir s'étendre sur l'essentiel au moins de la largeur du véhicule, derrière donc les sièges 31, 33.

Concernant la liaison articulée entre la partie mobile de l'actionneur 35 (tige coulissante 37) et l'organe intermédiaire d'entraînement 49, celle-ci est assurée par l'intermédiaire du système de biellettes 47 précité.

Ici, il s'agit de deux biellettes disposées côte à côte, parallèlement au plan 30 et pourvues chacune d'un tourillon tel que 53 figures 2 et 3 s'étendant transversalement à l'axe longitudinal 21, chaque tourillon étant disposé coulissant dans une glissière 55 incurvée vers le haut et vers l'avant pour transformer donc le mouvement de coulissement de la tige 37 en un mouvement de rotation (basculement) communiqué à l'organe intermédiaire 49.

Ainsi chaque biellette 47 est articulée à ses extrémités via des tourillons tels que 53 et 57 vis-à-vis respectivement de la tige 37 et d'un excentrique 59 lié fixement à la pièce intermédiaire, ou tube, 49.

Toujours pour favoriser un basculement court du panneau 15b, les biellettes 47 seront avantageusement coudées vers le haut et vers l'avant, comme les fentes 55.

Figures 2 et 3, les glissières 55 sont formées comme des fentes dans les parois latérales verticales de la pièce fixe de guidage 42.

Concernant maintenant l'aspect résistance mécanique/rigidité du véhicule, on notera qu'avantageusement chaque bras latéral 23 lié au panneau de toit avant 15a sera avantageusement lié en 25b à un prolongement latéral de la poutre structurelle transversale 45, tel que le prolongement droit repéré 45a figures 2 et 3, pour le côté droit du véhicule (prolongement gauche 45b figure 4).

Chacun de ces prolongements latéraux définit un coude avec la poutre 45 et s'étend comme elle sensiblement horizontalement. De chaque côté, les prolongements donne à la poutre une forme horizontale en U évasée, ouvert vers l'avant, chaque prolongement s'étendant ainsi en direction de l'arrière de l'une des portières 5 du véhicule. Ainsi, chaque prolongement est situé sensiblement près d'un bord latéral de ce véhicule, à proximité d'un bord latéral correspondant de l'un desdits sièges, tel que le bord latéral extérieur 33a du siège 33 sur la figure 2.

Avantageusement, derrière chaque siège, la poutre structurelle transversale 45 peut être soutenue par des piliers latéraux dressés 60 (figure 5) qui peuvent en particulier être situés à proximité immédiate des passages des roues arrière du véhicule.

La poutre 45 est ici fixée avec un caisson creux 61 en appui sur un soubassement structurel 63 et appartenant comme lui au bâti 3 du véhicule.

Dans chaque caisson 61 sera avantageusement disposé une armature de protection 65 visant, à la manière d'un arceau de sécurité mobile, à protéger les occupants du véhicule en cas de choc et notamment de retournement du véhicule.

Ainsi, chaque armature 65 sera avantageusement montée coulissante verticalement vis-à-vis du caisson creux 61 correspondant, entre une position basse (position représentée figure 2) dans laquelle l'armature est au moins en partie escamotée à l'intérieur du caisson et une position haute dans laquelle elle se dresse au moins en partie au-dessus de ce caisson, derrière le siège correspondant (position non représentée).

Pour faire se déplacer ainsi et rapidement chaque arceau de protection 65, un système de propulsion par exemple pyrotechnique pourra être utilisé, les parois latérales du caisson creux guidant chaque arceau dans son déplacement vertical jusqu'à ce que sa partie supérieure atteigne avantageusement un niveau plus haut que la tête des occupants.

L'actionneur 35 pourra notamment être un vérin par exemple hydraulique ou un système d'actionnement à arbre motorisé, mû par un moteur électrique.

## Revendications

1. Véhicule découvrable (1) comprenant un bâti structurel (3), un habitacle (17), au moins deux sièges côte à côte disposés dans cet habitacle, de part et d'autre d'un plan longitudinal vertical du véhicule (30), et un toit mobile entre une position fermée au-dessus de l'habitacle (17) et une position ouverte atteinte par dégagement du toit (15) vers l'arrière de cet habitacle, le toit comprenant au moins un panneau de toit (15a,15b) qui s'étend transversalement audit plan longitudinal vertical et est monté basculant vis-à-vis du bâti structurel (3) du véhicule, ce véhicule étant pourvu en outre d'un dispositif de commande pour le basculement dudit panneau (15a,15b) de toit, le dispositif de commande comprenant un actionneur (35) disposé et agissant sensiblement dans ledit plan longitudinal vertical, cet actionneur, qui est donc lié audit panneau de toit (15b) pour le faire basculer, comprenant une partie fixe (39) et une partie mobile (37), la partie fixe (39) étant lié au bâti structurel (3) du véhicule, la partie mobile (37) étant liée de façon articulée à un organe intermédiaire d'entraînement (49) qui est lié audit panneau de toit (15b) pour l'entraîner en rotation et est animé d'un mouvement de rotation autour d'un axe (49a) transversal audit plan longitudinal vertical (30) du véhicule, **caractérisé en ce que** l'organe intermédiaire d'entraînement (49) commandé en rotation par l'actionneur (35) est fixé derrière les sièges (31,33) à une poutre structurelle (45) appartenant au bâti structurel du véhicule et s'étendant suivant un axe transversal audit plan longitudinal vertical (30) du véhicule.

2. Véhicule selon la revendication 1, **caractérisé en ce que** :
- le toit comprend un deuxième panneau de toit (15a), les premier et second panneaux de toit (15a,15b) présentant respectivement un bord avant et un bord arrière, le second panneau de toit étant lié vers son bord arrière et de façon articulée au bord avant dudit premier panneau de toit, suivant un axe (20a) transversal au plan longitudinal vertical (30) du véhicule, sous la commande de l'actionneur (35),
- le deuxième panneau de toit (15a) est lié au bâti structurel (3) du véhicule par au moins un bras pivotant (23) articulé sur lui à une extrémité et sur une pièce (45a,45b) de ce bâti structurel à une deuxième extrémité, autour respectivement de quatrième et cinquième axes de rotation (25a,25b) transversaux au plan longitudinal vertical (30) du véhicule.

3. Véhicule selon la revendication 2, **caractérisé en ce que** ladite pièce auquel le bras pivotant (23) est lié à sa seconde extrémité, de façon articulée, est un prolongement latéral (45a,45b) coudé vers l'avant de la poutre structurelle (45), ce prolongement s'étendant près d'un bord latéral du véhicule, à proximité d'un bord latéral (33a) de l'un desdits sièges.

4. Véhicule selon l'une quelconque des revendications précédentes, **caractérisé en ce que**, derrière chaque siège (31,33), la poutre structurelle (45) est fixée à un caisson creux (61) en appui sur un soubassement structurel (63) appartenant au bâti structurel du véhicule et dans lequel est disposée une armature (65) de protection des occupants du véhicule, cette armature étant montée coulissante verticalement vis-à-vis du caisson creux (61) entre une position basse dans laquelle l'armature est au moins en partie escamotée à l'intérieur du caisson et une position haute dans laquelle elle se dresse au moins en partie au-dessus de ce caisson, derrière le siège correspondant.

5. Véhicule selon la revendication 1, **caractérisé en ce que** l'actionneur (35) est unique et le plan longitudinal vertical est le plan longitudinal médian (30) du véhicule.

6. Véhicule selon l'une quelconque des revendications précédentes, **caractérisé en ce que** l'actionneur (35) est disposé entre les deux sièges (31,33), sensiblement au niveau de leur dossier.

7. Véhicule selon l'une quelconque des revendications précédentes, **caractérisé en ce que** lesdites partie fixe (39) et partie mobile (37) de l'actionneur comprennent respectivement un fût (39) et une tige (37) coulissante par rapport au fût.

8. Véhicule selon la l'une quelconque des revendications précédentes, **caractérisé en ce que** la liaison articulée entre ladite partie mobile (37) de l'actionneur et l'organe intermédiaire (49) d'entraînement en rotation dudit panneau de toit (15b) est assurée par l'intermédiaire d'au moins une biellette (47) pourvue d'au moins un tourillon (53) s'étendant transversalement audit plan longitudinal vertical (30) du véhicule, ce tourillon étant disposé coulissant dans une glissière (55) fixe en position par rapport au bâti structurel (3) et incurvée pour transformer le mouvement de coulissement de la partie mobile de l'actionneur (35) en un mouvement de basculement communiqué à l'organe intermédiaire d'entraînement en rotation dudit panneau de toit (15b).

9. Véhicule selon la revendication 8, **caractérisé en ce que** ladite biellette (47) est articulée sur un excentrique (59) lié fixement à l'organe intermédiaire d'entraînement.

10. Véhicule selon l'une quelconque des revendications précédentes, **caractérisé en ce que** l'organe intermédiaire (49) d'entraînement en rotation dudit panneau de toit comprend un tube s'étendant globalement transversalement audit plan longitudinal vertical (30) du véhicule.

11. Véhicule l'une quelconque des revendications précédentes, **caractérisé en ce que l**a partie fixe (39) de l'actionneur est montée articulée en rotation par rapport au bâti structurel (3) du véhicule autour d'un axe (43) transversal audit plan longitudinal vertical (30) du véhicule.

12. Véhicule selon la revendication 8 et la revendication 11, **caractérisé en ce que** ladite partie fixe (39) de l'actionneur est fixée à une pièce de guidage (42) vis-à-vis de laquelle elle est montée pivotante autour dudit axe transversal (43), cette pièce de guidage comprenant la (chaque) glissière (55) qui guide le(s) tourillon(s) (53) de la (chaque) biellette (47).

13. Véhicule selon la revendication 10 ou l'une quelconque des revendications suivantes rattachée à elle, **caractérisé en ce que** ledit (premier) panneau de toit (15b) étant un panneau de custode pourvu d'une lunette arrière (34), le tube (49) entraîné en rotation par l'actionneur (35) est monté vers l'arrière de ce panneau de toit.

## Claims

1. A convertible vehicle (1) comprising a structural body (3), a passenger compartment (17), at least two seats arranged side by side in said passenger compartment, on each side of a vehicle vertical longitudinal plane (30), and a roof movable between a closed position above the passenger compartment (17) and an open position reached by displacing the roof (15) towards the back of said passenger compartment, said roof comprising at least one roof panel (15a, 15b) which extends transversely with respect to said vertical longitudinal plane and is mounted free to tilt relative to the structural body (3) of the vehicle, the vehicle being further provided with a control device adapted for tilting said roof panel (15a, 15b), said control device comprising an actuator (35) arranged and acting substantially in said vertical longitudinal plane, the actuator which is accordingly connected to said roof panel (15b) to make it to tilt, comprising a fixed part (39) and a movable part (37), the fixed part (39) being connected to the structural body (3) of the vehicle, the movable part(37) having an articulated connection with an intermediate driving means (49) which is connected to said roof panel (15b), for driving it into rotation, and which is movable by rotation about an axis (49a) transverse to said vertical longitudinal plane (30), **characterized in that** the intermediate driving means (49) driven into rotation by the actuator (35) is fixed behind the seats (31, 33) to a structural beam (45) that forms a part of said structural body of the vehicle and extends along an axis transverse to the vertical longitudinal plane (30) of the vehicle.

2. The vehicle according to claim 1, **characterized in that**:
- the roof further comprises a second roof panel (15a), the first and second roof panels (15a, 15b) having a front edge and a rear edge, respectively, the second roof panel being connected close to its rear edge and in an articulated manner to the front edge of said first roof panel, about an axis (20a) transverse to the vertical longitudinal plane (30) of the vehicle, under the control of the actuator (35),
- the second roof panel (15a) is connected to the structural body (3) of the vehicle through at least one pivoting arm (23) articulated thereto at a first end and to a part (45a, 45b) of the structural body at a second end, about respective fourth and fifth rotation axes (25a, 25b) transverse to said longitudinal vertical plane (30) of the vehicle.

3. The vehicle according to claim 2, **characterized in that** said part to which the pivoting arm (23) is connected at its second end, in an articulated manner, is a bent forward side extension (45a, 45b) of said structural beam (45), said extension extending close to one lateral side of the vehicle, close to one lateral edge (33a) of one of said seats.

4. The convertible vehicle according to anyone of the preceding claims, **characterized in that** behind each of said seats (31, 33) the structural beam (45) is fixed to a hollow box (61) bearing on a structural underframe (63) forming a part of the structural body of the vehicle and in which a protection reinforcement (65) is arranged for vehicle occupants, said reinforcement being installed free to slide vertically with respect to the hollow box (61), between a low position in which the reinforcement is at least partly retracted inside the box, and a high position in which it projects at least partly above said box, behind the corresponding seat.

5. The vehicle according to claim 1, **characterized in that** the actuator (35) is a single actuator, and the vertical longitudinal plane is the median longitudinal plane (30) of the vehicle.

6. The vehicle according to anyone of the preceding claims, **characterized in that** the actuator (35) is arranged between the two seats (31, 33), substantially at the level of the backs thereof.

7. The vehicle according to any one of the preceding claims, **characterized in that** said fixed part (39) and movable part (37) of the actuator comprise respectively a cylinder (39) and a sliding rod (37) sliding with respect to the cylinder.

8. The vehicle according to any one of the preceding claims, **characterized in that** the articulated connection between the movable part (37) of the actuator and the intermediate drive device (49) rotatingly driving said roof panel (15b) is carried out by means of at least one connecting rod (47) provided with at least one trunnion (53) extending transverse to said vertical longitudinal plane (30) of the vehicle, the trunnion being arranged free to slide along a slider (55) fixed in position with respect to the structural body (3) and curved to therefore transform the sliding movement of the movable part of the actuator (35) into a tilting movement applied to the intermediate drive device of said roof panel (15b).

9. The vehicle according to claim 8, **characterized in that** said connecting rod (47) is articulated onto a cam (59) fixed to the intermediate drive device.

10. The vehicle according to anyone of the preceding claims, **characterized in that** the intermediate drive device (49) rotatingly driving said roof panel includes a tube extending generally transverse to the vertical longitudinal plane (30) of the vehicle.

11. The vehicle according to anyone of the preceding claims, **characterized in that** the fixed part (39) of the actuator is articulated free to rotate with respect to the structural body (3) of the vehicle about an axis (43) transverse to the vertical longitudinal plane (30) of the vehicle.

12. The vehicle according to claims 8 and 11, **characterized in that** the fixed part (39) of the actuator is fixed to a guide part (42) with respect to which it is installed free to pivot about said transverse axis (43), the guide part including the (each) slider (55) that guides said trunnion(s) (53) of said (each) slider (47).

13. The vehicle according to claim 10 or to any one of the claims following claim 10 and depending thereon, **characterized in that** said roof panel (15b) being a rear quarter panel equipped with a back window (34), the tube (49) rotatingly driven by actuator (35) is mounted close to the back of said roof panel.

## Patentansprüche

1. Aufklappbares Fahrzeug (1) mit einem Karosserierahmen (3), einer Fahrgastzelle (17), wenigstens zwei nebeneinander beiderseits einer vertikalen Längsebene des Fahrzeugs (30) angeordneten Sitzen in dieser Fahrgastzelle und einem Dach, das zwischen einer über der Fahrgastzelle (17) geschlossenen Position und einer offenen Position beweglich ist, die durch eine Verlagerung des Dachs (15) zur Heckseite der Fahrgastzelle erreicht wird, wobei das Dach wenigstens eine Dachplatte (15a, 15b) umfasst, die sich quer zu der vertikalen Längsebene erstreckt und gegenüber dem Karosserierahmen (3) des Fahrzeugs schwenkbar montiert ist, wobei dieses Fahrzeug ferner eine Steuereinrichtung für die Schwenkung der Dachplatte (15a, 15b) aufweist, wobei die Steuereinrichtung ein Stellglied (35) umfasst, das in der vertikalen Längsebene angeordnet ist und im Wesentlichen in dieser wirkt, wobei dieses Stellglied, das demnach mit der Dachplatte (15b) verbunden ist, um diese in Schwenkung zu versetzen, einen festen Abschnitt (39) und einen beweglichen Abschnitt (37) aufweist, wobei der feste Abschnitt (39) mit dem Karosserierahmen (3) des Fahrzeugs verbunden ist, wobei der bewegliche Abschnitt (37) in gelenkiger Weise mit einem Zwischen-Antriebselement (49) verbunden ist, das mit der Dachplatte (15b) verbunden ist, um dieses in Drehung zu versetzen und zu einer Drehbewegung um eine Achse (49a) quer zur vertikalen Längsebene (30) des Fahrzeugs angeregt wird, **dadurch gekennzeichnet, dass** das durch das Stellglied (35) in Drehung versetzte Zwischen-Antriebselement (49) hinter den Sitzen (31, 33) an einem Karosserieträger (45) befestigt ist, der zu dem Karosserierahmen des Fahrzeugs gehört und sich entlang einer Querachse der vertikalen Längsebene (30) des Fahrzeugs erstreckt.

2. Fahrzeug nach Anspruch 1, **dadurch gekennzeichnet, dass**:
- das Dach eine zweite Dachplatte (15a) umfasst, wobei die erste und die zweite Dachplatte (15a, 15b) jeweils eine Vorderkante und eine Hinterkante aufweisen, wobei die zweite Dachplatte unter Steuerung des Stellgliedes (35) nahe an ihrer Hinterkante und in gelenkiger Weise mit der Vorderkante der ersten Dachplatte entlang einer Achse (20a) quer zur vertikalen Längsebene (30) des Fahrzeugs verbunden ist,
- die zweite Dachplatte (15a) mit dem Karosserierahmen (3) des Fahrzeugs durch wenigstens einen Schwenkarm (23) verbunden ist, der an dieser mit einem Ende und an einem Teil (45a, 45b) dieses Karosserierahmens mit einem zweiten Ende um jeweils eine vierte und fünfte Drehachse (25a, 25b) quer zur vertikalen Längsebene (30) des Fahrzeugs angelenkt ist.

3. Fahrzeug nach Anspruch 2, **dadurch gekennzeichnet, dass** das Teil, mit welchem der Schwenkarm (23) mit seinem zweiten Ende gelenkig verbunden ist, eine seitliche Verlängerung (45a, 45b) ist, die von dem Karosserieträger (45) nach vorne abgeknickt ist, wobei sich diese Verlängerung nahe an eine Seitenkante des Fahrzeugs in die Nähe einer Seitenkante (33a) einer der Sitze erstreckt.

4. Fahrzeug nach einem der vorhergehenden Ansprüche, **dadurch gekennzeichnet, dass** hinter jedem Sitz (31, 33) der Karosserieträger (45) an einem Hohlkasten (61) befestigt ist, der auf einem Karosserieboden (63) abgestützt ist, der zum Karosserierahmen des Fahrzeugs gehört und in welchem eine Armierung (65) zum Schutz der Insassen des Fahrzeugs angeordnet ist, wobei diese Armierung gegenüber dem Hohlkasten (61) zwischen einer tiefen Position, in welcher die Armierung wenigstens teilweise in das Innere des Kastens versenkt ist, und einer hohen Position, in welcher diese sich wenigstens teilweise über dem Kasten hinter dem entsprechenden Sitz erstreckt, vertikal verschiebbar montiert ist.

5. Fahrzeug nach Anspruch 1, **dadurch gekennzeichnet, dass** das Stellglied (35), einzig vorliegt und die vertikale Längsebene die längs verlaufende Mittelebene (309 des Fahrzeugs ist.

6. Fahrzeug nach einem der vorhergehenden Ansprüche, **dadurch gekennzeichnet, dass** das Stellglied (35) zwischen den beiden Sitzen (31, 33) im Wesentlichen auf Höhe ihrer Sitzlehne angeordnet ist.

7. Fahrzeug nach einem der vorhergehenden Ansprüche, **dadurch gekennzeichnet, dass** der feste Abschnitt (39) und der bewegliche Abschnitt (37) des Stellgliedes jeweils einen Schaft (39) und eine in Bezug dem Schaft verschiebbare Stange (37) umfasst.

8. Fahrzeug nach einem der vorhergehenden Ansprüche, **dadurch gekennzeichnet, dass** die Gelenkverbindung zwischen dem beweglichen Abschnitt (37) des Stellgliedes und dem Zwischen-Antriebselement (49) zur Drehung der Dachplatte (15b) mittels wenigstens eines Schwingarms (47) sichergestellt ist, der wenigstens einen Lagerzapfen (53) aufweist, der sich quer zu der vertikalen Längsebene (30) des Fahrzeugs erstreckt, wobei dieser Lagerzapfen in einer Gleitschiene (55) verschiebbar angeordnet ist, die in Bezug zu dem Karosserierahmen (3) positionsfest ist und gekrümmt ist, um die Schiebebewegung des beweglichen Abschnitts des Stellglieds (35) bei einer übertragenen Schwenkbewegung auf das Zwischen-Antriebselement zur Drehung der Dachplatte (15b) zu übertragen.

9. Fahrzeug nach Anspruch 8, **dadurch gekennzeichnet, dass** der Schwingarm (47) an einem Exzenter (59) angelenkt ist, der fest mit dem Zwischen-Antriebselement verbunden ist.

10. Fahrzeug nach einem der vorhergehenden Ansprüche, **dadurch gekennzeichnet, dass** das Zwischen-Antriebselement (49) zur Drehung der Dachplatte ein Rohr umfasst, das sich im Wesentlichen quer zur vertikalen Längsebene (30) des Fahrzeugs erstreckt.

11. Fahrzeug nach einem der vorhergehenden Ansprüche, **dadurch gekennzeichnet, dass** der feste Abschnitt (39) des Stellgliedes gelenkig zur Drehung in Bezug zu dem Karosserierahmen (3) des Fahrzeugs um eine Achse (43) quer zu der vertikalen Längsebene (30) des Fahrzeugs angebracht ist.

12. Fahrzeug nach Anspruch 8 und Anspruch 11, **dadurch gekennzeichnet, dass** der feste Abschnitt (39) des Stellglieds an einem Führungsteil (42) befestigt ist, gegenüber welchem dieser um die Querachse (43) schwenkbar angebracht ist, wobei dieses Führungsteil eine (jede) Gleitschiene (55) umfasst, die den/die Lagerzapfen (53) des (jedes) Schwingarms (47) führt.

13. Fahrzeug nach Anspruch 10 oder einem der diesem nachgeordneten Ansprüche, **dadurch gekennzeichnet, dass** die (erste) Dachplatte (15b) eine Karosserieplatte ist, die für ein Heckfenster (34) vorgesehen ist, wobei das durch das Stellglied (35) in Drehung versetzte Rohr (49) an der Heckseite dieser Dachplatte angebracht ist.
